# EUROPEAN PATENT APPLICATION

(11) **EP 4 336 772 A1**
(43) Date of publication of application: **13.03.2024**
(21) Application number: 22194412.7
(22) Date of filing: 07.09.2022
(51) Int. Cl.: H04L 9/00, G06F 21/62

(54) **METHOD FOR CONTROLLING A TECHNICAL FUNCTION OF A DEVICE WITH A COMPUTING UNIT**

(71) Applicant: twinu GmbH, 80333 Munich (DE)
(72) Inventor: ADLER, Christian, 80333 Munich (DE)
(74) Representative: Patentanwaltskanzlei WILHELM & BECK

(57) **Abstract**

The invention relates to a method for controlling a technical function of a device with a computing unit, wherein the computing unit is connected to a data interface and a data memory, wherein the data interface is designed to exchange data with a blockchain network, wherein the computing unit sends an identifier of the device and/or an ID of a device NFT assigned to the device to a smart contract of a blockchain of the blockchain network via the data interface, wherein the computing unit receives an address of a wallet to which a device NFT (non-fungible token) of the device is assigned to and/or a storage pointer of data of the device NFT and/or a predetermined parameter for controlling a technical function via the data interface, wherein the computing unit accesses data of the device NFT via the storage pointer and/or data of the wallet via the address of the wallet, wherein the data of the device NFT and/or the data of the wallet comprise at least one parameter for controlling a technical function of the device and/or a digital content for output by the device, and wherein the computing unit uses the parameter and/or the predetermined parameter for controlling the technical function of the device and/or the computing unit controls the device to output the digital content.

## Description

The invention relates to a method for controlling a technical function of a device having a computing unit, a computer-implemented method for providing at least one parameter for controlling a technical function of a device and/or for providing digital content for output by the device, a computing unit, a computer network, and a computer program.

US 11,182,467 B1 discloses a method in which the content of an NFT (non-fungible token) can be displayed using multiple displays. A user can authorize himself using a software application in order to access an archive of NFTs belonging to the user. To do this, the user must log in to a software application if the user has already been registered, or register and then log in. It is then verified that the user has authorized access to the digital archive of the user's NFTs. The digital archive is designed as a wallet, for example. If access has not yet been authorized, then the user must enter authorization data before being allowed access to the wallet and to the NFTs.

The object of the invention is to simplify the control of a technical function of a device. Furthermore, the simplification of the control of the technical function of the device is to be accompanied by an increased security for the access to parameters or content for the control of the technical function of the device.

The task of the invention is solved by the independent patent claims.

A method for controlling a technical function of a device with a computing unit is proposed. The computing unit is connected to a data interface and a data memory. The data interface is designed to exchange data with a blockchain network. The computing unit sends an identifier of the device and/or an ID of a device NFT that is assigned to a device to a smart contract of a blockchain of the blockchain network via the data interface. The computing device receives an address of a wallet to which the device NFT (non-fungible token) of the device is assigned to and/or a storage pointer of data of the device NFT and/or a predetermined parameter for controlling a technical function via the data interface from the smart contract of the blockchain via the data interface.

Basically, the device NFT may be an entry in the smart contract which is mapped to a specific wallet that manages the device NFT. Furthermore, the device NFT may have a storage pointer to a data storage where content of the device NFT is stored.

The computing unit accesses data of the device NFT via the address of the wallet to which the device NFT of the device is assigned to and/or the storage pointer of the device NFT. Furthermore, the computing unit may use the received predetermined parameters which were received from the smart contract of the blockchain via the data interface. The device NFT is an NFT associated with a specific device. The data of the device NFT has at least one parameter for controlling a technical function of the device and/or a digital content for output by the device. The computing unit uses the parameter of the device NFT to control the technical function of the device and/or the computing unit controls the device to output the digital content of the device NFT. The device NFT is also called twin NFT. Furthermore, the computing unit may use the predetermined parameter to control a technical function of the device. Furthermore, the corresponding wallet with its data of the owner of the device NFT can be doubtless identified via the device NFT and the smart contract it belongs to.

Additionally, the smart contract may identify an address of an archive, for example a wallet, that comprises at least one parameter for controlling a technical function of the device and/or a digital content for output by the device.

This means that the archive or wallet of the owner of the device NFT is reliably identified via the device NFT.

There may be data on other ledgers and/or smart contracts of the blockchain that relates to the wallet that is identified by the wallet address. The computer unit may use the wallet address to find data that relates to the wallet and which may be considered as data of the wallet. Therefore, data of the wallet also means data associated with the wallet identified by the wallet address. The computer unit may use the wallet address to find NFTs that are related to the wallet address and are seen as being data of the wallet.

All data and tokens related to a wallet are publicly available on the blockchain. This data may include links to external storage such as IPFS for example as writing and storing on the blockchain is very expensive. Manually searching all data and tokens related to a wallet in the blockchain is computational expensive, so it is common practice to use third party or self-managed indexer services that keep records of data and tokens related to specific wallets and make this verifiable data easily queryable through APIs (application program interface), e.g, for Ethereum blockchain: https://etherscan.io/apis. The computer unit may read the blockchain directly, but for practical reasons, it is preferred it uses one of these services to query data or tokens or non-fungible-tokens related to a specific wallet across the whole blockchain.

The parameters for controlling the device may be stored for example on a per device NFT basis. The NFT or device NFT is owned by (associated to) a unique wallet. Storing parameter in or on a device NFT or in a wallet means the data is related to the device NFT address (ID) or to the wallet address accordingly. Usually, all parameters for one device may be stored by one device NFT but it could also be that different parameters for controlling the device are stored in different device NFTs of one device.

By using a decentralized ledger on a permissioned or permissionless public or private blockchain to define who, which means what asymmetric cryptographic keyset, has access to control parameters of the device and/or to digital content for output via the device, no custom system has to be implemented to handle the user authentication, registration and management, simplifying the complex and time-consuming registration of a user for access to control parameters of the device and/or to digital content for output via the device. With the help of the device NFT of the blockchain, a unique and secure assignment of the data of the device NFT to the device is made possible. The use of the device NFT on the blockchain increases assurance that the parameters and/or digital content have not been altered. The smart contract simplifies the automatic issuance and management of the device NFT, whereby the device NFT is issued only for a specific identifier of a device. With the help of the blockchain smart contract, there is a fast and secure procedure for automatically transmitting the address for the device NFT's data.

In addition, specific parameters and digital content for certain devices can be issued automatically via the device NFT using the smart contract. Since the device NFT is managed in a decentralized manner in the blockchain, the device NFT data is not tied to a central server. This provides increased security for access to the device NFT against a failure of the central server. Furthermore, access to the device NFT data cannot be prevented centrally. This secures the availability of the device NFT data against third-party influences. The use of the device NFT is a protection against the manufacturer of the device who might turn of a cloud service for the device for example. The proposed method and system make the device operation independent of a service provided by the manufacturer.

The method described also simplifies the control of the device and thus the operability of the device for a user.

The device may be any kind of device that performs a technical function using a parameter for controlling the technical function. Furthermore, the device may be any kind of device that outputs a digital content.

Further embodiments of the invention are given in the dependent claims.

In one embodiment, the computing unit accesses the device NFT and its data via the data interface during startup of the device and/or during a restart of the device and/or at any other time during operation of the device and uses the data of the device NFT for a predetermined configuration of at least one technical function of the device. A startup of the device is a situation when the device is switched on, especially when the device is switched on the first time. In this way, a time-consuming configuration of a device for executing a technical function can be significantly simplified. In addition, the described procedure can run automatically in the background without requiring any input from a user. Thus, the operation of the device is significantly simplified. At the same time, the control of the device can be executed in a much safer way, since at the first start-up and/or at each restart and/or at any other time during operation of the device exactly the precise parameters or the precise content, which are determined by the device NFT, are used in the control of the device. Thus, without any effort on the part of the fixture user, the correct operation of the fixture is improved.

In another embodiment, the address of the device NFT is the address of an electronic archive. For example, the address may identify a wallet or refer to an IPFS storage. The wallet may manage the device NFT, and the contents of the device NFT itself may not be stored in the wallet, but may be stored in a further storage location. The further storage location can be, for example, a further data storage, in particular an IPFS storage, which enables a unique identification of the content of the device NFT via the storage address. With the aid of the IPFS memory, it can be ensured that the stored data content of the device NFT has not been changed. This means that data security for the data of the device NFT can be further increased. The use of the IPFS memory can be particularly advantageous or necessary for parameters for safety-critical functions of a device. Additionally, storing and changing data in the IPFS memory is faster, cheaper, simpler and needs less power than on the actual blockchains.

Further, it may also be advantageous or necessary for safety-critical digital content of the device NFT. For example, the content of the device NFT may be a deed or security certificate for the device. The address of data stored in an IPFS memory has a hash of the data, which means that it is sure that the data one is getting from this address has never been changed and never will. Nevertheless, it can be deleted if no-one replicates the data in the network anymore. An advantage of IPFS memory is that anyone can become a host of that IPFS file by joining the IPFS network or can pay any third party to keep that IPFS address (link) and its data alive.

With the help of the proposed method, the storage location of the device NFT can be determined automatically. Furthermore, the data of the device NFT and/or the data of the wallet that manages the device NFT and/or the predetermined parameter can be accessed automatically without any input by a user. This means that after transferring the device NFT once to the wallet of the device's user/owner, no registration, account creation or log-in is required on a central server, for example on a server of the manufacturer of the device. Thus, the device can continue to be operated even if the manufacturer's server is no longer operated or is currently unavailable. In this way, for example, configurations of the device can be stored in a decentralized manner and further parameters, digital content and configurations of the device can be created and provided by third parties independently of the manufacturer of the device. Even if the manufacturer goes bankrupt and stops all its cloud services, the device keeps working properly and the user/owner can transfer the device NFT to another user's/owner's wallet in order to give this person access to the device and/or its parameters and/or the specification of content to be displayed, without permission by the manufacturer.

In addition, the proposed method can ensure that only the parameters and/or digital content intended for the device are used, since these are uniquely assigned to the device by the device NFT. Thus, it can be ensured that no unwanted modification or falsification of the parameters or the digital content can take place neither by the user/owner of the device nor the manufacturer. In addition, this ensures that when the digital content is displayed, the original digital content as defined by the device NFT is displayed. For example, it can be prohibited that the display shows digital content other than the digital content which is owned/related to the wallet of the device user/owner. In addition, it is possible to design the smart contract and device NFT(s) in a way that various pre-conditions are to be met to modify parameters and/or content: for example it can be designed in a way that for changing a certain parameter for controlling a function of the device, both the user/owner and the manufacturer of the device have to confirm the modification. This can for example be used to activate additional features in a device for example a car after the user/owner made a payment and confirmed the modification of the parameter for controlling a function of the device together with the manufacturer of the device.

In addition, it is possible to share devices such as a car by simply sharing the device NFT (also temporarily) with another user. In contrast to handing over a physical key this can for example be a requirement for an insurance discount where the insurance makes sure that the smart contract does not allow sharing of the device NFT and with it it's related device.

In a further embodiment, the device is configured as a screen. The parameter for the technical function of the device NFT represents a parameter for controlling a display of an image on the screen. The computing unit uses the parameter to control the screen in the manner desired depending on the parameter. Moreover, in this embodiment, the digital content of the device NFT may represent an image. The computing unit controls the screen in such a way that the screen represents the image. The term image is understood to mean any type of optical representation. In addition, the term image also includes a series of images, i.e., a video or a changing hologram, etc. The image representation parameter may specify, for example, the resolution, the brightness, the playback frequency, the size of the image, etc.

Using the proposed method with the device NFT it is possible that the display screen shows an image according to the screen configuration determined by the data of/related to the device NFT and/or the data of/related to the wallet.

Furthermore, using the proposed method it can be assured that the display screen only displays the content of/related to the device NFT and/or the content of/related to the wallet that manages the device NFT.

In addition, the content of the device NFT can also include an audio file that is output via the screen. In this case, the parameter of the device NFT can also represent a volume, a bass component, a voice color or other settings of an equalizer.

In another embodiment, the device is configured as an illumination, wherein the illumination comprises an illuminant that generates light. The data of/related to the device NFT has at least one parameter for controlling the way the lighting generates light. The computing unit uses the parameter of the device NFT and controls the lighting accordingly. For example, the parameter may represent a color of the light, a brightness of the light, a duration of the light generation.

In addition, the parameter can, for example, specify a timed exposure scheme so that the lighting turns on or off light at specified times. For example, the lighting may be embodied as street lights where the configuration does not change to often as writing on the blockchain or IPFS memory may be time and resource intensive.

In a further embodiment, the device is designed as a vehicle. The data of the device NFT and/or the predetermined parameter have at least one parameter for controlling a technical function of the vehicle. The technical function may relate to the drive, the chassis, the lighting, the air conditioning, etc. The computing unit uses the parameter to control the function of the vehicle accordingly. For example, the parameter may determine a power output of the drive motor of the vehicle. In addition, the parameter may affect individual functions of a software of the vehicle, such as an autopilot or a navigation system, and enable/disable different functions and/or configurations of the autopilot or the navigation system depending on the parameter of the device NFT. Thus, with the help of the parameter of the device NFT, any kind of technical function that is controlled with the help of a software in the vehicle can be influenced or determined. For example, various comfort functions, such as autonomous driving in various support levels, can be enabled or (de)activated during operation of the vehicle depending on the parameter of the device NFT. In addition, various settings relating to the chassis, for example, i.e. a soft chassis, a medium chassis or a hard chassis, or the type and manner of steering, i.e. direct steering or less direct steering, or even the operation of the drive engine, i.e. sporty operation or energy-saving operation, can be determined with the aid of the parameter. Therefore, the device NFT can be used to activate or deactivate certain features/packages of a car. Cars often are built equally due to cost reasons (e.g., same engine) but customers pay for higher or lower-power/value features. The parameter of the device NFT and/or of the wallet and/or the predetermines parameter is at least a parameter for controlling a function of the vehicle, and wherein the computing unit controls the vehicle depending on the parameter, wherein for example the parameter determines different engine power and/or different level of navigation system and/or different level of the autopilot system, seat configurations, heating, massage, position memory, sunroof control, automatic light control, automatic rain wipers control, backup camera activation, drive mode control, drive-train control, power per wheel (for example 4x4 all-wheel or 4x2), gear duplication, suspension modes, infotainment configuration, interior lightning configuration. Furthermore, the parameter may determine a geographical area in which the vehicle functions or not.

Today, often a technical function of a device, for example a car, is controlled by a chip in regards to the "performance level" the user/owner gets to experience, this could also be controlled and be made modifiable by a device NFT. If the user/owner later pays for getting more engine power (e.g. temporarily) or additional driving assistance functions for the car, then the device NFT gets modified by the manufacturer with sign-in by the customer and then the user/owner can use the vehicle with the new features. Todays chips can be manipulated (in sometimes dangerous ways) without being noticed by the manufacturer. This can be prevented by the proposed method and system.

The proposed method and system allow only the owner of the device NFT to unlock and/or use the device. For example, only a leasing-taker of a vehicle may unlock the vehicle, or only the specific driver of a truck and/or an employee of the owning company may unlock the truck. Even combinations of usage-rights are possible, so that for example only the recipient of the truck's cargo may open the cargo container/load area of the truck. The smart contract of the device NFT can be combined with other elements on (e.g., other smart contracts), or connected to (e.g., sensors and other so-called "oracles") the blockchain such as a global positioning system (GPS) in a way that combinations of conditions need to be fulfilled for example that the cargo recipient can only open the truck container/load at its final destination.

In addition, depending on the chosen embodiment, further requirements for operating the vehicle (driver license) can be automatically queried, for example by the smart contract, and the corresponding function of the vehicle or, in principle, the start-up of the vehicle can only be permitted if the driver fulfills prescribed requirements, such as a minimum age, has a driver's license, has sufficient driving experience etc..

Furthermore, the user/buyer/renter of a device, for example a vehicle, gets a device NFT and only with this device NFT the device can be used. Any transaction (e.g. sharing) of the device NFT would be transparent on the blockchain and thus, in case of an accident for example the transaction history could be queried by the insurance and be validated with the conditions of the insurance contract.

Also, the smart contract of the blockchain and the device NFT could be configured in a way that in certain environmental conditions such as snow, heavy rain, severe weather for example, sharing of the car is not possible or driving the car is inhibited or a maximum speed of the car is reduced to a predetermined speed.

In addition, a vehicle that has already been delivered can also be subsequently modified (remotely) in the configuration of technical functions, such as the performance of the drive engine or the vehicle's software functions, such as automated driving or a navigation system, by adapting the contents of the device NFT accordingly.

In addition, depending on the selected embodiment, individual functions of the vehicle can, for example, only be enabled temporarily after the driver has enabled the corresponding function, for example, via a payment. In this case, the content of the device NFT can be adjusted accordingly with the request or payment.

In addition, functions of the vehicle that can be paid for once with a one-time fee (autopilot software, concierge service, new map materials etc.) can be activated and deactivated after the corresponding fee has been paid.

The activation and/or deactivation of certain features or packages of the device can be performed in "real-time" and can go "hand-in-hand" with the payment for the feature using atomic smart contracts for example. This way, the user/owner can be sure to receive the feature or package that is paid for. If not the whole transaction gets executed and completed, the payment and modification of parameters can be rolled-back to its original state. The above described methods for a vehicle may also be used for cars, bikes, bicycles, motor bikes e-bikes but also for any other devices.

In a further embodiment, the device is designed as an electronic lock. The data of/related to the device NFT has at least one parameter for controlling the function of the lock. The computing unit controls the function of the lock taking into account the parameter of the device NFT. The user/owner of the device NFT to the electronic lock can lock, unlock or modify other configurations of the electronic lock. Additionally, the parameter of the device NFT may include a list of persons and signatures or access keys that can be used to open the electronic lock. Thus, the function of the lock can be configured individually using the device NFT. The parameter may determine which wallet address, i.e. which public key from a cryptographic asymmetric key-pair is allowed to open the electronic lock for example. However, there may also be other processes to identify a person that is allowed to open or lock the electronic lock using the device NFT.

In addition, the smart contract of the device NFT can be combined with other elements on (e.g. other smart contracts), or connected to (e.g. sensors and other so-called "oracles") the blockchain such as a weather service in a way that combinations of conditions need to be fulfilled, for example only the allowed user may unlock the lock if there is "no rain".

In a further embodiment, the device is designed as a bicycle, for example a bike or a motor bike or an e-bike. The bycycle may include various functions that are configured or set depending on a parameter of the device NFT. For example, a power of the engine of the e-bike is determined by the parameter of the device NFT. Furthermore, a geographical area may be determined by the parameter in which the bicycle functions, for example the engine of an e-bike works. For example the parameter determines a power of an engine of the bicycle geographical area in which an e-bike functions and/or a certain input or signature of an electronic lock of a bicycle that allows the electronic lock to be opened, wherein for example the bicycle can only be put into operation when a signature or an input defined by the parameter is entered via an input device. For example, the bicycle may include an electronic lock that allows the lock to be opened for certain inputs or signatures depending on the parameter of the device NFT. Thus, for example, the bike can only be put into operation when the signature defined with the aid of the parameter is entered via an input device. The input device does not need to be on the bicycle. The input device may be a mobile phone for example. Furthermore, the bicycle may only be put into operation when the signature or input defined by the parameter is entered via an input device. These described functions refer to all devices and especially to all kind of bicycles, bikes, e-bikes and/or motor bikes.

This process may be performed by a request to the wallet of the device NFT owner which then can confirm the operation of the bycycle via signing in his wallet-app (e.g. Metamask). The input device may be a mobile phone that is connected for example via bluetooth with the computer unit of the bicycle. Furthermore, the input device may be part of the bicycle and is connected with the computer unit of the bicycle. Neither bycycle nor mobile phone must be online at all times during the operation.

Thus, by changing the contents of the device NFT, functions of the bicycle, bike, e-bike and/or motor bike, especially a start-up of functions of the bicycle can be flexibly changed. This flexible use of the bicycle, bike, e-bike or moto-bike could find application with sharing/rental bikes and e-scooters in cities.

Furthermore, the proposed method and system with the device NFT enables a type of theft protection as the device for example the e-bike cannot be used without the ownership of the device NFT.

A computer-implemented method for providing at least one parameter for controlling a technical function of a device and/or for providing a digital content for output by the device using a blockchain with a smart contract is proposed. The blockchain is operated by a blockchain network, wherein the blockchain network receives, via a data interface, a request to mint a device NFT with at least one predetermined parameter for a technical function of a device and/or a predetermined digital content and an identifier of the device. The blockchain network mint the device NFT with the transmitted data in the blockchain. The device NFT is stored in the blockchain and the device NFT data is stored in the blockchain or in another data storage. Depending on a used embodiment, a default minting process may be used.

The blockchain network may receive a request to create a new smart contract in the blockchain via the data interface. The smart contract shall map the device NFT to the identifier of the device and output a location of the device NFT and the data upon a request naming the identifier of the device. The blockchain network shall create the smart contract using the described function and store the smart contract in the blockchain. The blockchain network outputs the address of the wallet that manages the device NFT and/or a pointer to data storage when a request is made using the identifier of the device and/or an ID of the device NFT.

Depending on the chosen embodiment, the blockchain network may also output the address of the data of the device NFT (e.g., a pointer/link to a data storage) or a parameter directly.

With the help of the described method, it is possible to provide a parameter for controlling a technical function of a device and/or a digital content for output by the device in a decentralized manner. By using a blockchain, the data is managed decentrally and it is not necessary for a central server to provide the data. Thus, more flexible handling of the data and higher data security is achieved. In addition, the provision of the data is independent of a central server.

A computing unit is proposed, which is designed to execute the method for controlling a technical function of a device.

Further proposed is a computer network configured to execute the method for providing at least one parameter for controlling a technical function of a device and/or for providing a digital content for output by the device using a blockchain.

Furthermore, a computer program is proposed that is designed to perform the proposed procedures.

The invention is explained in more detail below with reference to the figures that show some specific examples where the proposed method and system can be used. However, the application of the proposed method and system is not limited to these embodiments and can be applied to other devices as well.

It shows
- Figure 1 a: schematic diagram of a device with a blockchain network,
- Figure 2A a: schematic procedure for creating a device NFT,
- Figure 2B a: schematic procedure for providing a parameter for controlling a technical function and/or a digital content for a device,
- Figure 3 a: schematic representation of a flowchart in which a screen is controlled or configured using the device NFT,
- Figure 4 is a: schematic representation of a program flow that controls a lighting system using a device NFT,
- Figure 5 shows: a schematic diagram of a program sequence used to control or configure a vehicle with the aid of the device NFT,
- Figure 6 a: schematic representation of a program flow used to control or configure a smart lock using the device NFT, and
- Figure 7 is a: schematic representation of a program flow used to control a bike using a device NFT.

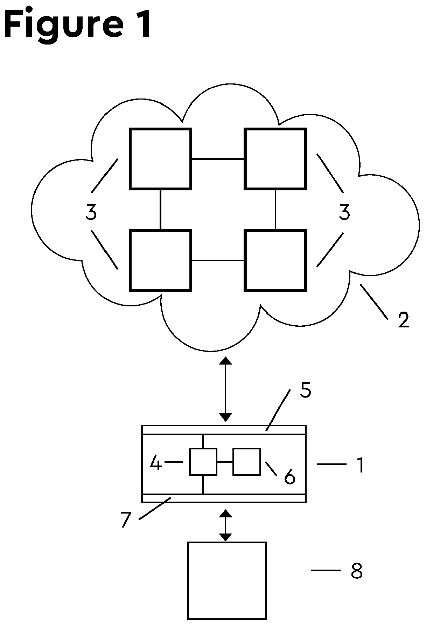

Figure 1 shows a schematic diagram of a device 1 that is in communication with a blockchain network 2. The blockchain network 2 has a plurality of computers 3 that operate a blockchain in a network. The device 1 has a computing unit 4 that can exchange data with the blockchain network 2 via a data interface 5. Furthermore, a data storage 6 is provided, which is in communication with the computing unit 4. Furthermore, a second data interface 7 may be provided, via which the computer unit 1 may exchange data with a user device 8. The user device may be, for example, a remote control, a cell phone, a tablet PC or a computer. The device 1 may be any kind of device that performs a technical function using a parameter for controlling the technical function. Furthermore, the device may be any kind of device that outputs a digital content. The device may be a vehicle, a bike, an electronic lock, a display, a lighting, or any other kind of machine for example a coffee machine, a safe, etc.

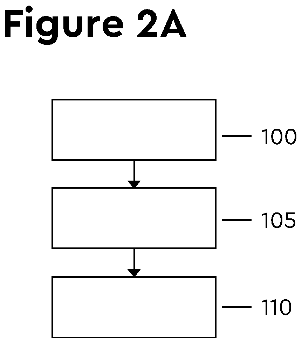

Figure 2A shows a schematic representation of a method for minting a device NFT for a specific device using a software application. The device NFT is a cryptographically unique, indivisible, irreplaceable and verifiable token that represents the device in a blockchain. The device NFT usually contains only a reference (URL), i.e. an address to a digital content stored on another data store (storage pointer) and an address of a wallet (of the owner of the device NFT) to which the device NFT is assigned to. The storage pointer (data URL) points to the address of a memory where the data of the device NFT are stored. The data (digital content) of the device NFT has at least one parameter for controlling a technical function of the device and/or a digital content for output by the device. The digital content represents metadata of the device NFT.

At program item 100, a computing unit transmits the task to the blockchain network to create an NFT with predetermined data, hereinafter referred to as device NFT, for a device with a certain identifier and to store the device NFT in the blockchain. For this purpose, the identifier of the device, for example a MAC address of the device or another identifier such as a unique product number, and the data and/or the storage pointer of the data of the device NFT are transmitted by the computing unit to the blockchain network 2. The creation of the device NFT is performed by a smart contract of the blockchain (MintDeviceNFT) and can preferably only be called by a computer that has a minter role for this smart contract.

At a program point 105, information is also transmitted by the computing unit to the blockchain that the device NFT to be minted is to be stored in the blockchain and the device NFT is to be assigned to a predetermined wallet. The predetermined wallet has a specific address within the blockchain that is unique for the wallet. In addition, the address of the wallet is transmitted to the blockchain network by the computing unit.

In a subsequent program point 110, the blockchain network creates the device NFT by using a smart contract. The device NFT is a one-to-one identifier. The smart contract stores the device NFT in the blockchain with the information that the device NFT is assigned to the predetermined wallet with the transmitted address of the wallet. Subsequently, the device NFT is stored in the blockchain with a storage pointer that comprises the address of the predetermined wallet. The transmitted data of the device NFT are stored at the address of the storage pointer. The storage pointer is an address of an electronic memory. This means that the data of the device NFT is stored at the address of the memory. The memory is usually outside the blockchain and the data of the device NFT is usually stored outside the blockchain.

For example, an Ethereum blockchain can be used as the blockchain. The programming of the described process can be carried out, for example, with the Solidity software. Solidity is an object-oriented programming language and was developed to program smart contracts for a blockchain. The task of Solidity is to provide the source code of smart contracts for the Ethereum Virtual Machine (EVM). A compiler is used to create a smart contract for the Ethereum blockchain from this.

In addition, using the Solidity software, a smart contract with a function GetOwnerOf-DeviceNFT, in which the smart contract, in response to a request with a certain identifier of a device, outputs as a response the address of the wallet to which the device NFT of the device with the transmitted identifier (MAC address) is currently assigned.

In addition, Solidity can be used to program a smart contract in the blockchain that has the function GetDeviceNFTURL, with which, when an identifier of the device (e.g., MAC address) is transmitted to the smart contract, the smart contract outputs an address (link, URL, storage pointer) at which data (metadata) of the device NFT, for example a name, an image, a video, a voice file, parameters of technical functions of a device, etc. is stored. The address (link, URL, storage pointer) can point to other data stores or memories that are independent of the blockchain.

In addition, the software Solidity can be used to program a smart contract in the blockchain that has the function SetDEviceNFTURI, that can typically only be called by the owner wallet of the device NFT (or by other wallets/roles predefined in the smart contract). This function can be used to change control parameters in case the storage is immutable, as in IFPS. This function can change the address of the data of the device NFT. This function is not necessary if the data storage is centralized.

Furthermore, the software Solidity can be used to program a smart contract that has a function TransferDeviceNFT that, when the identifier of a device (e.g., MAC address) and an address of a new wallet are transmitted, updates the entries in the blockchain for the device NFT of the identifier of the device in the smart contract, replacing the previous address of the wallet with the transmitted address of the new wallet. Smart contracts with the function TransferDeviceNFT may be used to assign the device NFT to another wallet. This may be usually the case when the device is sold and/or transferred (sometimes temporarily) to a new owner/user. Then the device NFT is managed by a new wallet of the new owner/user.

The function TransferDeviceNFT requires: the new wallet address (to address) and the identifier of the device NFT to be transferred (e.g., MAC address). The function can typically only be called by the current owner of the NFT (or by other wallets/roles predefined in the smart contract). This is verified by the blockchain by a cryptographic signature at the time of calling the function TransferDeviceNFT. The smart contract will then simply update the wallet address that the device NFT is related to (owned by).

Furthermore, the Solidity software may be used to create a smart contract within the blockchain with the function that a device NFT can be lend or borrowed to another user by transferring the device NFT for a given time to another wallet of the new user.

The described functionalities are only the core functionalities that may be used for smart contracts of a blockchain. The device NFTs will follow the standards EIPS/eip-721 (https://eips.ethereum.org/EIPS/eip-721) and/or similar standards which embody same and/or similar functionalities on a blockchain. Functions to mint an NFT, transfer it, get the owner or get the URI are part of the NFT specification and will work as described on that document.

With these steps, a computer-implemented method for providing at least one parameter for controlling a technical function of a device and/or for providing a digital content for output by the device can be created using a blockchain on a blockchain network.

The blockchain network receives a request to create a smart contract in the blockchain via the data interface, where the smart contract is to map the device NFT to the identifier of the device within a block (or several) of the blockchain. The smart contract is to issue an address of a wallet that owns/manages the device NFT and/or a data pointer (data URI) for the data of the device NFT and/or a parameter for controlling a function of the device upon a request naming the identifier of the device. The blockchain network creates the smart contract using the described function and stores the smart contract in a block of the blockchain. Thus, the blockchain network issues the address of the wallet that owns/manages the device NFT and/or the data pointer (data URI) for the data of the device NFT and/or a parameter for controlling a function of the device in response to a request with the identifier of the device.

The blockchain network receives, via a data interface, a request to mint a device NFT (non-fungible token) with at least one predetermined parameter for a technical function of a device and/or with a predetermined digital content. The blockchain network also receives an identifier for the device. Thereupon, the blockchain network mints the device NFT with the predetermined parameter for the technical function of the device and/or with the predetermined digital content in the blockchain using a smart contract of the blockchain. The device NFT is stored in the blockchain with the predetermined parameter for the technical function of the device and/or the predetermined digital content in the blockchain or in another data store.

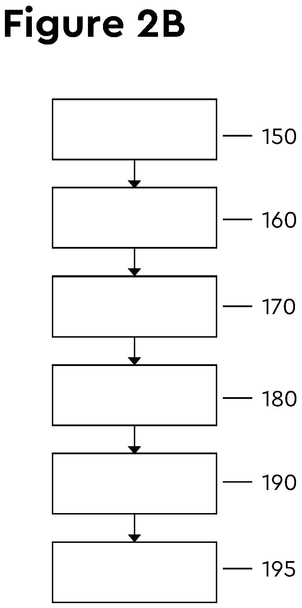

Figure 2B shows a schematic procedure for providing a parameter for controlling a technical function and/or a digital content for a device, wherein a computer-implemented method for providing at least one parameter for controlling a technical function of a device and/or for providing a digital content for output by the device using a blockchain operated by a blockchain network is described.

At program item 150 the blockchain network 2 receives from a computer unit 4 an identifier of a device and/or an ID (identifier) of a device NFT of the device and the request to provide an address of a wallet to which the device NFT of the device with this identifier is assigned to and/or to provide a storage pointer of data of the device NFT and/or a predetermined parameter of the device NFT.

At program item 160 the request with the identifier of the device is delivered to the smart contract that performs the function GetDeviceNFTURL.

At program item 170 the smart contract has a table that shows which identifier of a device and/or which ID of the device NFT is assigned to which device NFT and where the device NFTs are stored in the blockchain. The table is also stored in a block or in several blocks of the blockchain. The device NFT may have typically two data points: an address of a wallet (of the owner/user of the device NFT) to which the device NFT is assigned to and a storage pointer (data URI) that points to an address of a memory where the data of the device NFT are stored. The data of the device NFT may also be stored in a block or several blocks on the blockchain. Basically, data of the device NFT and/or the smart contract or other data may be stored in several blocks on the blockchain.

Then the smart contract searches for the device NFT that is assigned to the received identifier of the device and/or the ID of the device NFT. Then the smart contract reads from the table the storage pointer (address, link, URL) at which data of the device NFT are stored and reads the address of the wallet to which the device NFT is assigned to.

At program item 180 the smart contract sends the address of the wallet which owns/manages the device NFT and/or the storage pointer (link, URL) at which data of the device NFT are stored and/or a predetermined parameter of the device NFT for controlling a technical function of the device to the requesting computer unit 4.

At program item 190 the computer unit 4 checks the storage pointer and/or the wallet of the device NFT whether there is stored at least one parameter and/or data. At program item 195 the computer unit 4 uses the found at least one parameter of the device NFT for controlling a technical function of the device and/or the found data of the device NFT for outputting the data via the device.

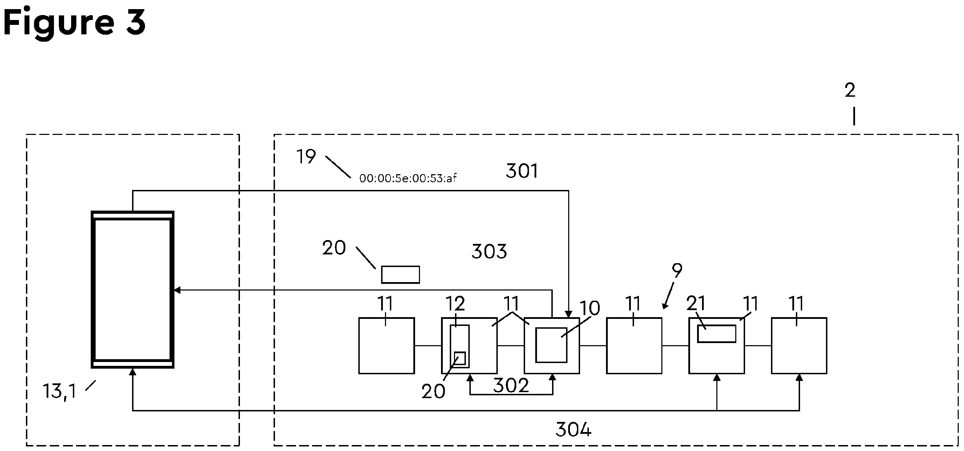

Figure 3 shows a use case for the described method in which the device 1 is designed in the form of a screen 13, i.e. a display screen. The screen 13 has a computing unit 4 that can exchange data with the blockchain network 2 via a data interface 5. Furthermore, the screen 13 has a data storage 6 which is in communication with the computing unit 4. Furthermore, the screen 13 may have a second data interface 7, via which the screen 13 may exchange data with a user device 8. In an embodiment, the screen would not need to communicate with a smart phone via bluetooth for example. The content to be displayed on the screen would come directly from the wallet and/or the device NFT and/or the storage of the device NFT. Also configuration of technical parameter of the screen could be done on the wallet via the phone but without direct communication between phone and the screen.

The user device 8 may be, for example, a remote control, a cell phone, a tablet PC or a computer. The computing unit 4 of the screen 13 determines at least one parameter for controlling a technical function of the screen 13 and/or a digital content for output via the screen 13 with the aid of the device NFT. The device NFT has typically two data points: an address of a wallet (of the owner/user of the device NFT) to which the device NFT is assigned to and/or a storage pointer (data URI) that points to an address of a memory where the data of the device NFT are stored.

At program item 301, computing unit 4 transmits a request to blockchain network 2 and an identifier 19 of screen 13 via data interface 5 to determine for identifier 19 of screen 13 the device NFT associated with identifier 19 of screen 13. This request is transmitted to a smart contract 10 of the blockchain network. The smart contract 10 has a mapping table between identifiers of different devices and the corresponding stored device NFTs of the devices in the blockchain. At the following program item 302, the smart contract determines the device NFT 12 in a block 11 of the blockchain 9 and an address 20 (storage pointer) of data of the device NFT 12 and/or an address of a wallet that manages the device NFT 12 and/or a parameter of the device NFT 12 for controlling a technical function of the device. The smart contract transmits at program item 303 the address 20 of the data of the device NFT 12 and/or the address of the wallet that owns/manages the device NFT 12 and/or a parameter of the device NFT 12 for controlling a technical function of the device back to the data interface 5 of the computing unit 4. The data of the device NFT may comprise parameters and/or digital content. The address 20 of the data of the device NFT 12 and/or the address of the wallet that owns/manages the device NFT 12 is stored in the device NFT 12 in the block of the blockchain.

Based on the transmitted address 20, the computing unit 4 can access the content of the device NFT at program point 304. The content of the device NFT, i.e. parameters for controlling the function of the screen 13 and/or digital content for output via the screen 13, is stored in the memory 6 of the screen 13. The computing unit 4 uses the stored parameter of the device NFT to control the output of the screen and/or controls the screen in such a way that the screen outputs the digital content of the device NFT.

Based on the transmitted wallet address, the computing unit 4 can access the content that is owned/managed by the wallet of the device NFT at program point 304. The content that is managed by the wallet, i.e. parameters for controlling the function of the screen 13 and/or digital content for output via the screen 13 is stored in the memory 6 of the screen 13. The computing unit 4 uses the stored parameter of the wallet to control the output of the screen and/or controls the screen in such a way that the screen outputs the digital content of the wallet which is stored in the memory 6.

The computing unit 4 may be embodied to pull with the knowledge of the address of the wallet to which the device NFT is assigned to further data from the wallet that may be for example other NFTs 21 for example art NFTs. This further data may not be content of the device NFT itself but content of the wallet to which the device NFT is assigned to. Therefore, the computing unit 4 may also use the digital content of the wallet to control the display 13.

This process explained for the screen 13 may be used for any other device.

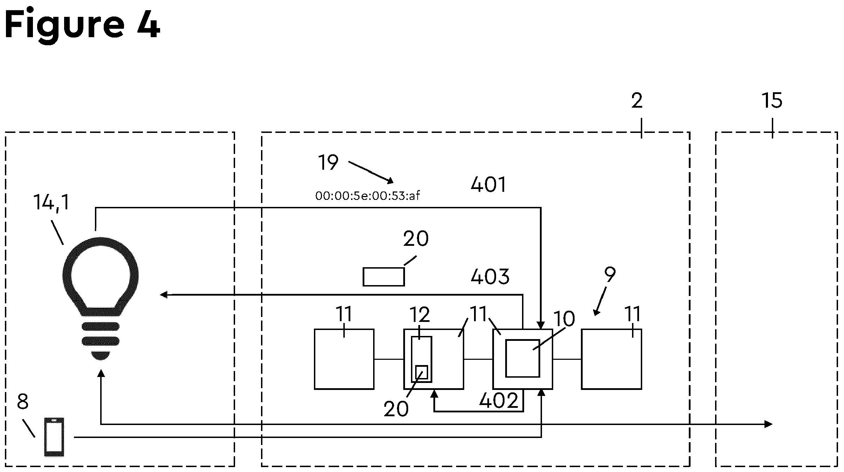

Figure 4 shows another use case for the described method, in which the device 1 is in the form of a lighting 14. The lighting 14 has a computing unit 4 that can exchange data with the blockchain network 2 via a data interface 5. Furthermore, the lighting has a data storage 6 which is in communication with the computing unit 4. Furthermore, the lighting 14 may have a second data interface 7 via which the lighting 14 1 may exchange data with a user device 8. The user device may be, for example, a remote control, a cell phone, a tablet PC or a computer.

At program item 401, the computing unit 4 of the lighting 14 transmits a request to the blockchain network 2 and an identifier 19 of the lighting 14 to determine for the transmitted identifier 19 of the lighting 14 the device NFT 12 associated with the identifier 19 of the lighting 14. This task is performed by the smart contract 10, which has a table in which identifiers of lightings are assigned to corresponding device NFTs. At a program point 402, the smart contract determines the device NFT 12 associated with the identifier 19. Furthermore, the smart contract 10 reads an address 20 (storage pointer) of data of the device NFT 12 and/or an address of a wallet that owns/manages the device NFT 12 and/or a predetermined parameter of the device NFT 12 for controlling a technical function of the device. The address 20 of the data of the device NFT 12 and/or the wallet address and/or the predetermined parameter is stored in the device NFT 12. At a subsequent program point 403, the smart contract 10 returns the address 20 of the data of the device NFT and/or the address of the wallet that manages the device NFT and/or a parameter to the computing unit 4 via the data interface 5.

Thereupon, the computing unit accesses the data of the device NFT 12 of the lighting 14 via the received address 20. In the present example, the address (link) refers to a further data memory 15, which is designed, for example, as an IPFS data memory. In the present case, the computing unit reads parameters for controlling the lighting, for example a color of the lighting, a brightness of the lighting, lighting times, etc., from the further data memory 15 and uses those for controlling the lighting. In addition, the data of the device NFT can also be stored in the memory 6 of the computing unit 4.

Based on the transmitted wallet address, the computing unit 4 can access the content that is managed by the wallet of the device NFT. The content that is managed by the wallet, i.e. parameters for controlling the function of the lighting 14 is stored in the memory 6 of the lighting 14.

Depending on the chosen embodiment, the smart contract 10 of the blockchain of the blockchain network 2 may be formed in such a way that, via a software application, a user with a user device 8, such as a cell phone, can change an assignment of the device NFT to a memory address, such as a new memory address of another data memory 15, such as an IPFS memory. In this way, the user can make an adjustment to the parameters of the control of the lighting itself. This function may be applied at any of the embodiments of the device 1.

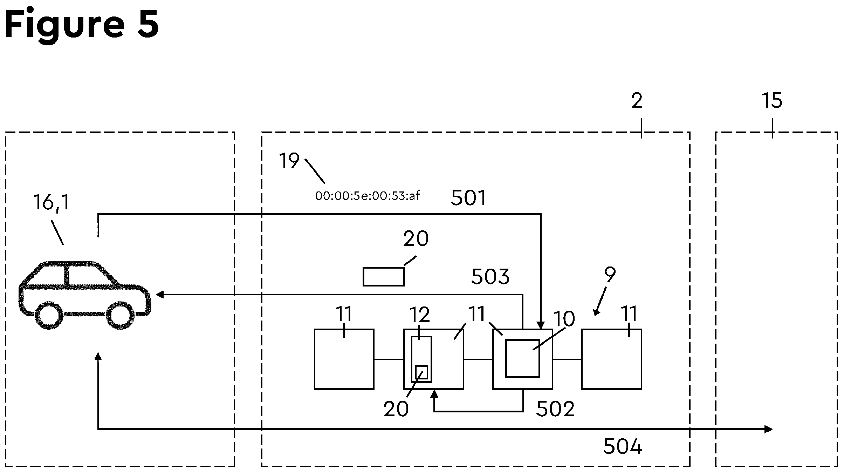

Figure 5 shows another embodiment of the proposed method, in which the device 1 is in the form of a vehicle 16. The vehicle 16 has a computing unit 4 that can exchange data with the blockchain network 2 via a data interface 5. Furthermore, the vehicle 16 has a data storage 6, which is in communication with the computing unit 4. Furthermore, the vehicle 16 has a second data interface 7, via which the vehicle may exchange data with a user device 8. The user device may be, for example, a remote control, a cell phone, a tablet PC or a computer. The vehicle may comprise a global positioning system to detect the geographical position of the vehicle.

At program point 501, the computing unit 4 of the vehicle 16 sends a request to the blockchain network 2 and an identifier 19 of the vehicle 16 to determine the associated device NFT 12 for the transmitted identifier 19 of the vehicle 16.

The smart contract 10 has a mapping table between identifiers of different vehicles 16 and the corresponding stored device NFTs of the vehicles in the blockchain.

Thereupon, the smart contract 10 determines the device NFT 12 assigned to the identifier 19 of the vehicle 20 in the blockchain 9 based on the mapping table.

The device NFT 12 of the vehicle 16 has an address 20 (link) to data at least one parameter for controlling a technical function of the vehicle and/or a digital content for output by the vehicle 16. Furthermore, the device NFT may have an address of a wallet that owns/manages the device NFT.

At program point 503, the smart contract 10 transmits the address 20 of the data and/or the address of the wallet that manages the device NFT and/or a parameter of the device NFT 12 for controlling a technical function of the device to the computing unit 4 of the vehicle 16. The computing unit uses the address 20 to access a further data memory 15, which is designed, for example, as an IPFS data memory. In this access, the computing unit determines parameters for controlling functions of the vehicle, for example relating to the power of the drive motor, an autopilot function and/or a navigation function, and/or digital content for output via a screen and/or a loudspeaker of the vehicle. The computing unit 4 uses the parameters to control at least one technical function of the vehicle 16 and/or controls the display screen and/or the loudspeaker of the vehicle to output the digital content.

Based on the transmitted data and/or wallet address, the computing unit 4 of the vehicle 16 can access the content that is managed by the wallet of the device NFT. The content that is managed by the wallet, i.e. parameters for controlling the function of the vehicle and/or digital content for output via a screen and/or loudspeaker of the vehicle is stored in the memory 6 of the vehicle. The computing unit 4 uses the stored parameter of the wallet to control the function of the vehicle.

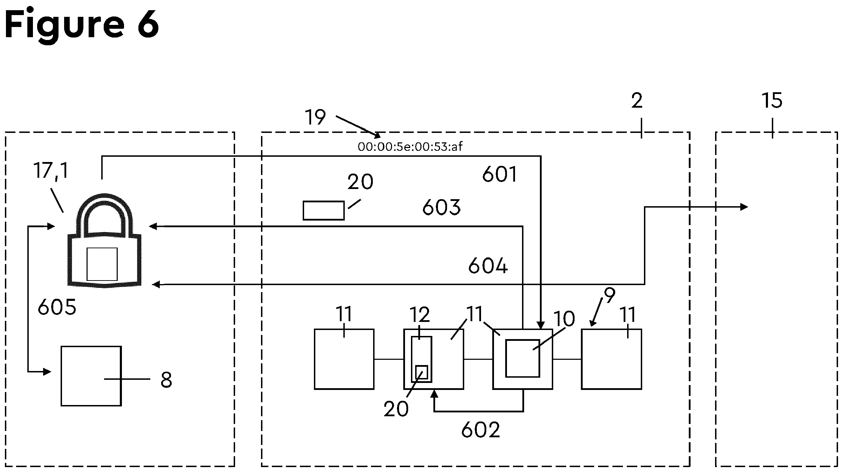

Figure 6 shows an embodiment of the method in which the device is in the form of an electronic lock 17. The electronic lock 17 has a computing unit 4 that can exchange data with the blockchain network 2 via a data interface 5. Furthermore, the electronic lock has a data storage 6, which is in communication with the computing unit 4. Furthermore, the electronic lock has a second data interface 7, via which the device 1 may exchange data with a user device 8. The user device may be, for example, a remote control, a cell phone, a tablet PC or a computer.

At program point 601, the computing unit 4 of the electronic lock 17 sends a request and an identifier 19 of the lock 17 to the blockchain network 2 to determine the associated device NFT 12 for the transmitted identifier 19 of the lock 17.

A smart contract 10 of the blockchain has a mapping table between identifiers of different electronic locks and the corresponding stored device NFTs of the electronic locks in the blockchain.

This request is executed by the smart contract 10, wherein the smart contract 10 determines the device NFT 12 for the electronic lock 17 via the mapping table.

In addition, the device NFT has an address 20 (link) to data of the device NFT and/or an address of a wallet that owns/manages the device NFT and/or a parameter. The address 20 may be in the form of a memory address or other instruction. At program point 603, the smart contract 10 transmits the address 20 of the data of the device NFT 12 of the lock 17 and/or the address of the wallet that owns/manages the device NFT and/or a parameter of the device NFT 12 for controlling a technical function of the device via the data interface 5 to the computing unit 4 of the lock 17.

The computing unit 4 then uses the address 20 at program point 604 to access a further data memory 15, for example an IPFS data memory, in which parameters of the lock, such as persons authorized to access the lock and/or numerical codes for opening the lock, are stored. The computing unit uses the data from the device NFT to control the operation of the lock. For example, at a program point 605, the computing unit 4 queries signatures of persons authorized to access in order to open the lock 17 via a user device 8.

Based on the transmitted data and/or wallet address, the computing unit 4 of the electronic lock can access the content that is managed by the wallet of the device NFT. The content that is managed by the wallet, i.e. parameters for controlling the function of the electronic lock and/or digital content for output via a screen and/or loudspeaker of the electronic lock is stored in the memory 6. The computing unit 4 uses the stored parameter of the wallet to control the function of the electronic lock.

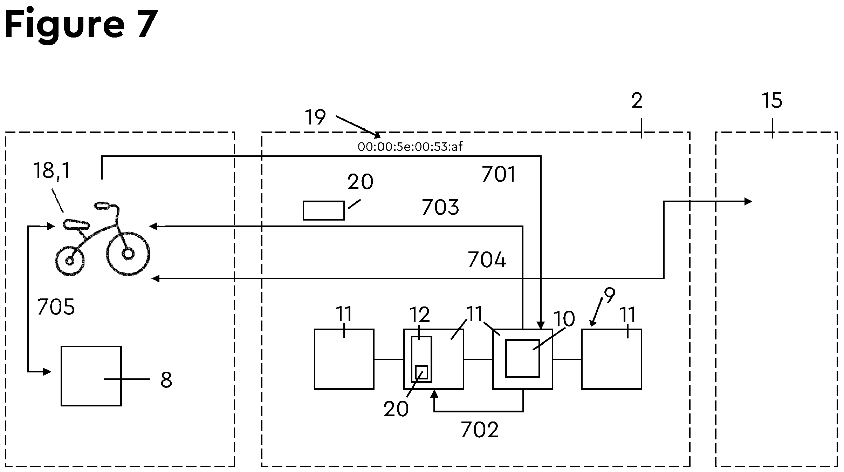

Figure 7 shows a further embodiment of the method in which the device 1 is in the form of a bicycle 18, in particular a bike, an e-bike or a motor bike. The bicycle 18 has a computing unit 4 that can exchange data with the blockchain network 2 via a data interface 5. Furthermore, the bicycle has a data storage 6, which is in communication with the computing unit 4. Furthermore, the bicycle has a second data interface 7, via which the device 1 may exchange data with a user device 8. Furthermore, the bicycle and/or the input device may comprise a global-positioning-system (GPS) for detecting the geographical position of the bicycle or of the user device. The user device may send the detected global position to the computing unit 4. The user device may be, for example, a remote control, a cell phone, a tablet PC or a computer.

At program item 701, computing unit 4 sends a request and an identifier 19 of bicycle 18 to blockchain network 2 via data interface 5 of bicycle 18 to determine for identifier 19 of bicycle 18 the associated device NFT 12. Thereupon, at program point 702, the smart contract 10 of the blockchain 9 searches for the device NFT 12 of the bicycle 18 based on the identifier 19. The smart contract 10 has a mapping table in which identifiers 19 of devices 1 are mapped to corresponding device NFTs 12 of the devices 1. In addition, the smart contract determines an address 20 (link) to data of the device NFT 12 and/or an address of a wallet that owns/manages the device NFT and/or a parameter of the device NFT 12 for controlling a technical function of the device, which the smart contract sends back to the data interface 5 of the computing unit 4 at program point 703.

Thereupon, at a program point 704, the computing unit 4 accesses a further data memory 15, e.g. an IPFS memory, via the data interface 5 with the aid of the address 20 and determines the data of the device NFT of the bicycle 18.

In the example described, the device NFT data in the further data memory 15 has a list of users who are allowed to use the bicycle. This information is stored by the computing unit 4 in the memory 6 of the bicycle 18. Subsequently, at a subsequent program point 705, the computing unit 4 asks for signatures via a user device8, for example via Bluetooth or WLAN, from the authorized persons in order to enable the bicycle for use or not.

Based on the transmitted data and/or wallet address, the computing unit 4 of the bicycle 18 can access the content that is managed by the wallet of the device NFT. The content that is managed by the wallet, i.e. parameters for controlling the function of the bicycle and/or digital content for output via a screen and/or loudspeaker of the bicycle is stored in the memory 6 of the bicycle. The computing unit 4 uses the stored parameter of the wallet to control the function of the bicycle.

The decentralized blockchain network 2 may operate as an open, yet encrypted peer-to-peer network in which asset transaction records-known as blocks-are linked via cryptographic hash functions in a distributed, immutable ledger of interconnected blocks, i.e., a blockchain. Each block in the chain may include one or more digital asset transactions accompanied by corroboration information representing a validity of each transaction as assessed by peer-validation devices. Encrypted, decentralized computing architectures allow for identity verification and authentication of transacted assets while preventing duplication of a cryptography-protected ("cryptographic") digital asset registered to the blockchain network. Decentralized asset management may work by encrypting a proprietary asset file, breaking the encrypted code into tiny shards, and sending these shards to numerous different computing nodes on the decentralized computing network. A validated owner is provided with a private key that indicates where in the network the asset is located and how to reassemble or "decrypt" the file. For use as a distributed ledger, an individual blockchain is typically managed by a host administrator and distributed to multiple peers collectively adhering to a protocol for inter-node communication and block validation.

The disclosed systems and techniques provide many advantageous technical effects including construction and storage of a device NFT of a predetermined device, wherein the device NFT comprises a wallet address and/or a storage pointer and/or data. The storage pointer (link) refers to a specific memory where data of the device NFT is stored. The data of the device NFT may comprise at least one parameter for controlling a technical function of the device and/or a digital content for output by the device. The wallet address determines the wallet to which the device NFT is assigned to.

Construction and storage of the blockchain enables networked computing devices to quickly and efficiently generate, validate and transact device NFTs, thereby improving the flexibility of the individual devices.

A further perk of using a decentralized network of a blockchain for the proposed method is that the efficiency is increased, the proposed method is rapid and inexpensive since it is not necessary to implement centralized ledgers of who owns what or which device has which operation parameter and/or has access to which data and it is not necessary to create logins/registrations for the device. Therefore, it is not necessary to deploy an own software architecture to manage the devices.

The blockchain was designed to be a public shared ledger maintained by all the nodes within a peer-to-peer network. A blockchain system does not rely on any central trusted authority like traditional banking and payment systems. Instead, trust is achieved as an emergent property from the interactions between nodes within the network. A full copy of the blockchain contains every transaction ever executed within the blockchain network, therefore a party transacting on the blockchain can verify with a high level of certainty that the other party is able to transact as the other party claims. A further consequence is that the blockchain is provably robust against forging or hacking. One significant consequence of this is that it is not necessary to utilize a trusted third party, such as a bank for a transaction of money or a trusted security program for a transaction of access rights.

The blockchain as a concept was initially defined in the infrastructure of Bitcoin. Since then, the concept has been generalized into distributed ledgers that use the blockchain to verify and store any transactions without needing cryptocurrency or tokens. Many crypto-currencies now use blockchains as the basis of their platform. Popular blockchain systems include Bitcoin and Ethereum for example.

As above, a blockchain is essentially a list of transactions shared by all nodes participating in a system based on an agreed protocol. Each transaction represents a transfer of a specific quantity of a digital asset from one party's address to another party's address. Thus, an address functions similar to a bank account. Blockchains record all transactions that have occurred, and provide tamperproof immutable data storage called a distributed ledger. The whole network of participating entities reach consensus on transactions included into the distributed ledger. A transaction is an identifiable data package that essentially can represent anything users wish to transact in. In many blockchain systems the data package is an indication of monetary value such as Bitcoin or Ether, but they can also include parameters and results of function calls in a smart contract. The integrity of the transactions in a blockchain system is ensured by cryptographic techniques. A computer that is connected to and participating in the blockchain system that contains a full copy of the currency's blockchain is known as a 'full node'.

In blockchain systems, transactions are aggregated into blocks. Each block contains a mathematical function calculation, called a hash, of the previous block. This mathematical function calculation is easy to calculate given a specific transaction but difficult to reverse given a specific hash. This represents a means to determine whether content in the transaction has been modified in any way. By including the hash in the transaction, this creates a chain where any changes made to a block will change that block's hash, which must be recomputed and stored in the next block. This changes the hash of the next block, which must also be recomputed and so on until the end of the chain.

Therefore, each block is also linked to the previous block (the 'parent' block) by containing a reference the previous block. This has the effect of creating a chain of blocks from the current block to the very first block known as the genesis block. Each block is guaranteed to come after the previous block chronologically because the previous block's hash would otherwise not be known. Each block is also computationally impractical to modify once it has been in the chain for a while because every block after it would also have to be regenerated. These properties are what make a transaction relating to a capability on the blockchain difficult to forge.

Smart contracts in a blockchain system are intended to replicate the legal concept of contracts. That is, where contracts are mutual agreements that impose obligations on the parties to the contract, a smart contract is a way of automatically imposing obligations or conditions on the transaction.

Bitcoin and Ethereum (and most other blockchain systems) utilize scripts for the purpose of verifying transactions. It is possible that a smart contract can be implemented as a script and it would operate the same as the way a normal transaction would be verified. Although this is the practice that Bitcoin has adopted, this is quite difficult because the script has to execute in order for the transaction to be verified. In Ethereum, smart contracts are distinct from verifying a transaction. As a result smart contracts can exist independently of a transaction that initiated the contract. Other differences include that the smart contract has to be deployed before it can be executed and once deployed the smart contract will execute unless explicitly terminated. In both Bitcoin and Ethereum, the script contains all the function calls (op codes) that are required for the contract to be performed automatically. All nodes on both blockchain systems execute the script.

The wallet is software that serves as a digital repository for NFTs, token and Bitcoins for a specific blockchain. The device NFT is handled by the wallet in the same way as an NFT. For example, the wallet Metamask is a wallet for the blockchain Ethereum and others. The wallet is also the basis for sending and receiving NFTs, tokens and Bitcoin and thus essential for incoming and outgoing data and payments. Each wallet has an individual public address with which the wallet can be uniquely identified in the blockchain. Purchased or acquired NFTs or token are transferred/re-assigned to this address and end up with the wallet with this address. When selling or transferring an NFT, the NFT is re-assigned from the current wallet to a new wallet by using the address of the new wallet.

A wallet works on the basis of "asymmetric cryptography" with two different digital keys - a public key and a secret, private key. Strictly speaking, the wallets do not store the NFTs, they only exist in the blockchain. The wallet manages the public and private keys required to access the NFTs and thus enables the storage of the NFTs as well as the sending and receiving of the NFTs.

An NFT can only ever have one owner. Ownership rights of an NFT are managed through the unique ID and metadata that no other NFT (token) can replicate. NFTs are created or minted through smart contracts of the blockchain that assign ownership rights and enable NFT transferability. When someone creates or mints an NFT, this involves executing code stored in smart contracts, usually conforming to different standards, such as ERC-721, and storing this information in the blockchain where the NFT (device NFT) is managed. The creation or minting process is superficially composed of the following steps: A new block is created, information is validated and information is recorded in the blockchain.

NFTs and also device NFTs have some special characteristics:
Each NFT created in the blockchain has a unique identifier directly associated with an address of the blockchain.
Each NFT has an owner and this information can be easily verified. NFTs exist on the blockchain and can be traded on blockchain-based NFT marketplaces.

Ownership of NFTs and also device NFTs can be easily proven. If a user buys or receives an NFT, ownership of the NFT is transferred/re-assigned to the wallet of the new owner via a public address of the wallet of the new owner.

The proposed procedure also offers advantages in terms of encryption. When using cloud services, it is advantageous or often even mandatory to encrypt personal data. The proposed method can eliminate the need for encryption since no centralized cloud services are used. In addition, only wallet data is transmitted, which is impersonal or already encoded.

The proposed method is not limited to the Ethereum blockchain (incl. Layer-2 variants such as Polygon) but any blockchain (e.g. Solana, Tezos etc.) that support NFTs and therefore also device NFTs.

Embodiments of the invention may also relate to an apparatus for performing the operations herein. This apparatus may be specially constructed for the required purposes, and/or it may comprise a general-purpose computing device selectively activated or reconfigured by a computer program stored in the computer. Such a computer program may be stored in a non-transitory, tangible computer readable storage medium, or any type of media suitable for storing electronic instructions, which may be coupled to a computer system bus. Furthermore, any computing systems referred to herein may include a single processor or may be implemented with architectures employing multiple processor designs for increased computing capability.

Embodiments of the invention may also relate to a product that is produced by a computing process described herein. Such a product may comprise information resulting from a computing process, where the information is stored on a non-transitory, tangible computer readable storage medium and may include any embodiment of a computer program product or other data combination described herein.

The various embodiments can be further implemented in a wide variety of operating environments, which in some cases can include one or more user computers or computing devices which can be used to operate any of a number of applications. User or client devices can include any of a number of general purpose personal computers, such as desktop or laptop computers running a standard operating system, as well as cellular, wireless and handheld devices running mobile software and capable of supporting a number of networking and messaging protocols. Such a system can also include a number of workstations running any of a variety of commercially available operating systems and other known applications for purposes such as database management. These devices can also include other electronic devices, such as dummy terminals, virtual terminals, thin-clients, and other devices capable of communicating via a network.

Embodiments can utilize at least one network that would be familiar to those skilled in the art for supporting communications using any of a variety of commercially available protocols, such as TCP/IP, FTP, UPnP, NFS, and CIFS. The network can be, for example, a local area network, a wide-area network, a virtual private network, the Internet, an intra-net, an extranet, a public switched telephone network, an infrared network, a wireless network, or any combination thereof.

In embodiments utilizing a Web server, the Web server can run any of a variety of server or mid-tier applications, including HTTP servers, FTP servers, CGI servers, data servers, Java servers and business application servers. The server(s) may also be capable of executing programs or scripts in response requests from user devices, such as by executing one or more Web applications that may be implemented as one or more scripts or programs written in any programming language, such as Java^{®}, C, C# or C++ or any scripting language, such as Perl, Python, or TCL, as well as combinations thereof. The server(s) may also include database servers, including without limitation those commercially available from Oracle^{®}, Microsoft^{®}, and IBM^{®}.

The environment can include a variety of data stores and other memory and storage media as discussed above. These can reside in a variety of locations, such as on a storage medium local to (and/or resident in) one or more of the computers or remote from any or all of the computers across the network. In a particular set of embodiments, the information may reside in a storage-area network (SAN) familiar to those skilled in the art. Similarly, any necessary files for performing the functions attributed to the computers, servers or other network devices may be stored locally and/or remotely, as appropriate. Where a system includes computerized devices, each such device can include hardware elements that may be electrically coupled via a bus, the elements including, for example, at least one central processing unit (CPU), at least one input device (e.g., a mouse, keyboard, controller, touch-sensitive display element, or keypad) and at least one output device (e.g., a display screen, a display device, printer, or speaker). Such a system may also include one or more storage devices, such as disk drives, optical storage devices and solid-state storage devices such as random access memory (RAM) or read-only memory (ROM), as well as removable media devices, memory cards, flash cards, etc.

Such devices can also include a computer-readable storage media reader, a communications device (e.g., a modem, a network card (wireless or wired), an infrared communication device) and working memory as described above. The computer-readable storage media reader can be connected with, or configured to receive, a computer-readable storage medium representing remote, local, fixed, and/or removable storage devices as well as storage media for temporarily and/or more permanently containing, storing, transmitting, and retrieving computer-readable information. The system and various devices also can include a number of software applications, modules, services, or other elements located within at least one working memory device, including an operating system and application programs such as a client application or Web browser. It should be appreciated that alternate embodiments may have numerous variations from that described above. For example, customized hardware might also be used and/or particular elements might be implemented in hardware, software (including portable software, such as applets, APIs, scripts, and the like), or both. Further, connection to other computing devices such as network input/output devices may be employed.

Storage media and other non-transitory computer readable media for containing code, or portions of code, can include any appropriate media known or used in the art, such as but not limited to volatile and non-volatile, removable and non-removable media implemented in any method or technology for storage of information such as computer readable instructions, data structures, program modules or other data, including RAM, ROM, EEPROM, flash memory or other memory technology, CD-ROM, digital versatile disk (DVD), or other optical storage, magnetic cassettes, magnetic tape, magnetic disk storage, or other magnetic storage devices, or any other medium which can be used to store the desired information and which can be accessed by a system device.

Based on the disclosure and teachings provided herein, a person of ordinary skill in the art will appreciate other ways and/or methods to implement the various embodiments and that many modifications and variations are possible. The device may be embodied as any kind of machine for example coffee machine, a safe etc.

### Reference list

- 1: Device
- 2: Blockchain network
- 3: Computer
- 4: Computer unit
- 5: Data interface
- 6: Memory
- 7: Second data interface
- 8: User device
- 9: Blockchain
- 10: Smart Contract
- 11: Block
- 12: device NFT
- 13: Screen
- 14: Lighting
- 15: further data storage
- 16: Vehicle
- 17: electronic Lock
- 18: Bicycle
- 19: Device identification
- 20: Address/link/parameter
- 21: further NFT

## Claims

1. Method for controlling a technical function of a device with a computing unit, wherein the computing unit is connected to a data interface and a data memory, wherein the data interface is designed to exchange data with a blockchain network, wherein the computing unit sends an identifier of the device and/or an ID of a device NFT assigned to the device to a smart contract of a blockchain of the blockchain network via the data interface, wherein the computing unit receives an address of a wallet to which a device NFT of the device is assigned to and/or a storage pointer of data of the device NFT and/or a predetermined parameter of the device NFT for controlling a technical function via the data interface, wherein the computing unit accesses data of the device NFT via the storage pointer and/or data of the wallet via the address of the wallet, wherein the data of the device NFT and/or the data of the wallet comprise at least one parameter for controlling a technical function of the device and/or a digital content for output by the device, and wherein the computing unit uses the parameter and/or the predetermined parameter for controlling the technical function of the device and/or the computing unit controls the device to output the digital content.

2. The method of claim 1, wherein the computing unit accesses data from the device NFT and/or data from the wallet via the data interface and/or the predetermined parameter from the blockchain during a startup of the device and/or during a restart and/or at any time during operation of the device and uses the data to configure at least one technical function of the device.

3. Method according to any one of the preceding claims, wherein the storage pointer is an address of an electronic archive, in particular an IPFS (inter planetary file system) storage and/or an API endpoint (application programmable interface).

4. The method of any one of claims 1 to 3, wherein the device is configured as a display screen, wherein the data of the device NFT and/or the data of the wallet and/or the predetermined parameter represent at least one parameter for controlling the display screen, wherein the computing unit uses the parameter to control the display screen for example the computing unit uses the parameter to control a representation of digital content on the display screen and/or settings of the display screen for example such as on/off time of the display screen.

5. The method of any one of the claims 1 to 4, wherein the computing unit controls the display screen such that the display screen represents the digital content of the device NFT and/or of the wallet.

6. The method of any one of claims 1 to 3, wherein the device is a lighting, wherein the parameter and/or the predetermined parameter is at least a parameter for controlling the lighting, and wherein the computing unit controls the lighting with the parameter, in particular with regard to brightness and/or color and/or duration of light of the lighting.

7. The method of any one of claims 1 to 3, wherein the device is a vehicle, wherein the parameter and/or the predetermined parameter is at least a parameter for controlling a function of the vehicle, and wherein the computing unit controls the function of the vehicle depending with the parameter for example with regard to different engine power and/or different level of navigation system and/or different level of the autopilot system.

8. The method of any one of claims 1 to 3, wherein the device is an electronic lock, wherein the parameter and/or the predetermined parameter is at least a parameter for controlling the electronic lock, and wherein the computing unit controls the electronic lock with the parameter, wherein in particular the parameter determines a person that is authorized to open the electronic lock and/or the parameter determines a code for opening or closing the electronic lock and/or the parameter determines which wallet address is allowed to open the lock.

9. The method of any one of claims 1 to 3, wherein the device is a bicycle for example a bike, a motor bike or an e-bike, wherein the parameter and/or the predetermined parameter is at least one parameter for controlling the bicycle, and wherein the computing unit controls a technical function of the bicycle with the parameter.

10. A computer-implemented method for providing at least one parameter for controlling a technical function of a device and/or for providing a digital content for output by the device using a blockchain operated by a blockchain network, wherein the blockchain network, in particular a smart contract, outputs at least a predetermined parameter for controlling a technical function of the device and/or an address of a wallet to which a device NFT of the device is assigned to and/or a storage pointer of data of the device NFT upon a request with an identifier of the device and/or upon a request with an ID of the device NFT assigned to the device.

11. The method of claim 10, wherein the blockchain network, in particular a smart contract, receives a request for minting a device NFT for a technical function of the device and/or a digital content and/or a predetermined parameter and to assign the device NFT to a predetermined address of a wallet, wherein the blockchain network further receives an identifier for the device, wherein the blockchain network, in particular a smart contract, mints the device NFT in the blockchain for the device, wherein the device NFT is stored in the blockchain and assigned to the predetermined address of the wallet.

12. The method according to claim 11, wherein the blockchain comprises a smart contract, wherein the smart contract is embodied to associate the device NFT with the identifier of the device and/or with the identifier of the device NFT, wherein the smart contract is embodied to output at least a predetermined parameter and/or the address of the wallet to which the device NFT is assigned to and/or the storage pointer of data of the device NFT in response to a request naming the identifier of the device and/or the identifier of the device NFT, wherein the smart contract outputs the predetermined parameter and/or the address of the wallet to which the device NFT is assigned to and/or the storage pointer of the data of the device NFT.

13. A computing unit configured to perform a method according to any one of claims 1 to 9.

14. A computer network adapted to perform a method according to any one of the claims 10 to 12.

15. A computer program comprising instructions which, when the program is executed by a computing unit, cause the computing unit to execute the method of any one of claims 1 to 12.
